Europäisches Patentamt

European Patent Office

Office européen des brevets

(19)

(11) Publication number: **0 123 099**
**A1**

## (12) EUROPEAN PATENT APPLICATION

(21) Application number: **84102691.7**

(22) Date of filing: **12.03.84**

(51) Int. Cl.³: **G 05 B 19/12**

(30) Priority: **14.03.83 IT 3401283 U**

(43) Date of publication of application:
**31.10.84 Bulletin 84/44**

(84) Designated Contracting States:
**AT BE CH DE FR GB IT LI LU NL SE**

(71) Applicant: **INDUSTRIE ZANUSSI S.p.A.**
**Via Giardini Cattaneo 3**
**I-33170 Pordenone(IT)**

(72) Inventor: **Frucco, Giuseppe**
**via Nazionale 64**
**I-33020 Enemonzo (Udine)(IT)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) **Program unit for electric household appliances with optical input system.**

(57) The invention relates to a program unit for electric household appliances such as laundry washing machines, laundry driers, dishwashers and the like, comprising a microprocessor for controlling the operating cycle of the respective machine.

A selected program is fed to the microprocessor by an optical reader device (14, 17, 18) scanning a bar code (13) containing the respective program.

The bar code (13) may be provided on the control panel (10) or another part of the machine, in which case the optical reader may be an optical pencil (14) connected to the microprocessor through a cable, or a reading-transmitting device (18, 20 to 24) cooperating with a receiver (19) connected to the microprocessor.

The bar codes may also be provided on cards (15) adapted to be read by an optical reader (17) installed at a fixed position in or on the machine.

FIG. 1

Program Unit for Electric Household Appliances
with Optical Input System

D e s c r i p t i o n

The present invention relates to a program unit for electric household appliances such as laundry washing machines, laundry driers and dishwashers, which makes use of an optical input system based on the employ of a bar code.

As generally known, there is a growing tendency towards the introduction of electronic technologies in electric household appliances. This fact is evidenced in particular by the increasing employ of microprocessor control units in substitution of the traditional electromechanic program timing units.

This indubitably leads to substantial progress with regard to reliability, flexibility, rapidity and precision of the program input and of the execution of the operating cycles of the respective electric household appliance.

On the other hand, the controls to be actuated by the user are still of the electromechanic type, such as rotatable knobs, slide controls, lever switches, diaphragm pushbuttons and the like functioning on the resistance or capacity variation principle.

The integration of electronics in electric household appliances has thus been only partially accomplished and has not led to the potentially attainable results. In the meantime there have been developed, although for use in other fields than in the field of electric household appliances, electronic data collecting systems employing optical readers for reading a bar code and adapted to be connected to electronic computers for processing the thus collected data. Systems of this type are used for example in the handling of goods, e.g. in stores and shops, where each article is provided on its outside with an identification bar code to be read by an optic reder device adapted to transmit the thus read data to an electronic computer or to register them in an electronic memory. The thus collected data are processed for rapidly furnishing an operator with general and specific informations required for making correct decisions.

It is an object of the present invention to provide a program unit for electric household appliances, in which electronic technologies are integrated to a higher degree within the actuation and control devices of the apparatus, so as to eliminate various electromechanical elements from the control panel, improve flexibility with regard to the input of programmes and render the operations to be performed by the user more comodious and simple.

This object is attained by the employ of programmed encoder means including a bar code and associated with an optical bar code reader connected to the microprocessor controlling the operation of the electric household appliance.

These and other characteristics will become more clearly evident from the following description of exemplary embodiments of the invention with reference to the drawings, wherein

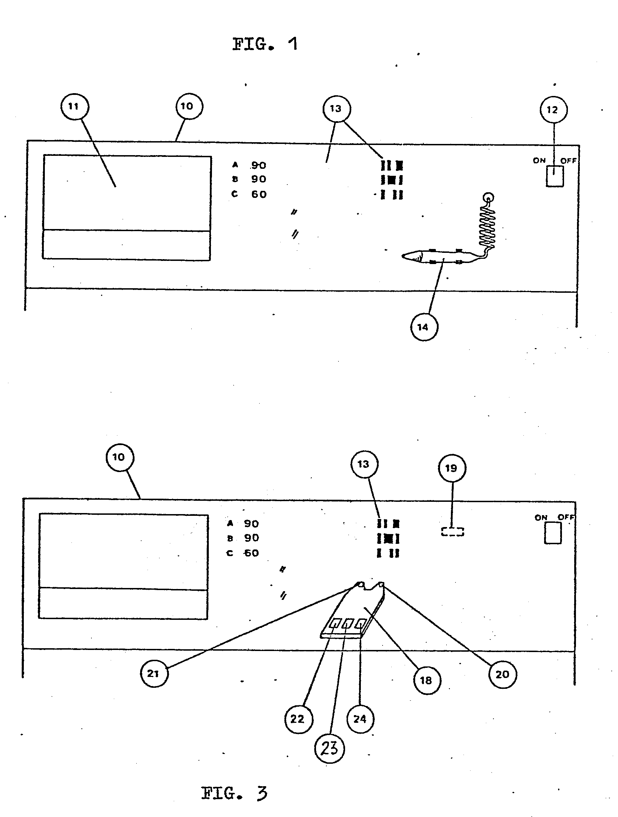

figs. 1, 2 and 3 show diagrammatic views of three different embodiments of the invention.

Diagrammatically shown in fig. 1 is the control panel 10 of a laundry washing machine. In evidence on control panel 10 are only a conventional detergent container 11 and a single push button 12 for starting and stopping operation of the machine. Disposed on control panel 10 in any known manner, for example by printing, are various programmes 13 in the form of bar codes. The control panel has further associated therewith an optical sensor 14, for instance in the form of a per se known optical pencil, connected to a not shown microprocessor rearward of the control panel by means of a flexible cable.

The optical pencil 14 comprises opto-electronic elements
conventionally including an infrared radiation emitting
diode and a photosensitive transistor arranged to convert
the bar code into a series of binary code data in response
to the interdiction and saturation states of the transistor.

The sequence of the binary code data is then transmitted to
the microprocessor which proceeds to initiate and control
the implementation of the respective input program.

The operations to be performed by the user are thus greatly
facilitated in that, after depressing push button 12 for
activating the machine, all that is required is to pass the
sensing point of the optical pencil 14 over the selected
program 13. An optical or acoustic signal may optionally be
provided for giving the user confirmation that the reading
of the selected program has been carried out properly. It
is obviously possible to dispose on the control panel
additional programmes for cancelling or modifying a programmed operating cycle or for excluding any phase from a
selected programme, all in the form of suitable bar codes.

It is even possible to eliminate the push button 12 by disposing on the control panel a suitable start and stop code.

The bar codes 13 for the various programmes may of course
be located on parts of the machine other than the control
panel 10, they may for instance be printed on the inside
of the door of the detergent container 11.

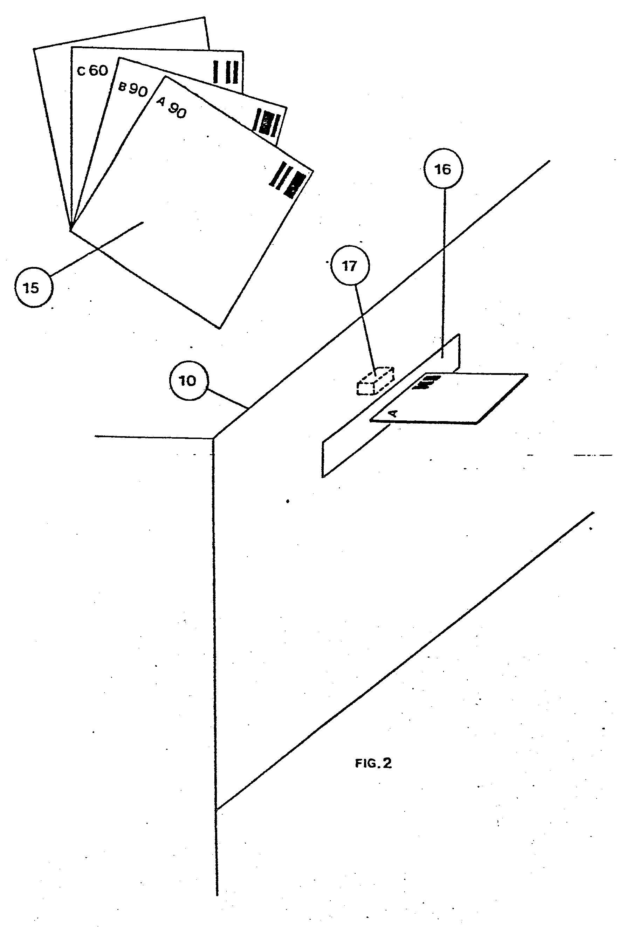

In another embodiment of the invention, the program bar
codes may be provided on a number of cards 15 to be inserted
into a slot 16 formed in the control panel 10 of the
machine as shown in fig. 2.

In this embodiment, a bar code reader 17 is disposed at a

4

fixed location inside slot 16 and connected to the microprocessor. The cards 15 will then have to be displaced within slot 16 in a manner permitting the respective program bar code to be properly read. In this embodiment the control panel 10 of the machine is still further simplified by elimination of the optical pencil  and its associated connection.

Fig. 3 shows a further embodiment of the invention employing a device 18 which is physically separate from the machine and adapted to read the bar codes 13 on control panel 10 and to transmit the thus collected data to a receiver 19 on the control panel.

The device 18 is provided in a per se known manner with an optical reader 20, a transmitter 21, an activation and deactivation push button 22, a reading push button 23 and a transmitting push button 24.

In this embodiment there is also no physical connection of the optical reader to the microprocessor, the only connection of this type being located interiorly of the machine between the receiver 19 and the microprocessor.

0123099

GRÜNECKER, KINKELDEY, STOCKMAIR & PARTNER

PATENTANWÄLTE
EUROPEAN PATENT ATTORNEYS

A. GRUNECKER, DPL.-ING
DR H KINKELDEY, DPL.-ING
DR W. STOCKMAIR, DPL.-ING, AE E (CALTECH)
DR K. SCHUMANN, DPL.-PHYS
P. H. JAKOB, DPL.-ING
DR G BEZOLD, DPL.-CHEM
W. MEISTER, DPL.-ING
H. HILGERS, DPL.-ING
DR H. MEYER-PLATH, DPL.-ING

8000 MÜNCHEN 22
MAXIMILIANSTRASSE 58

EP 1454

## Program Unit for Electric Household Appliances with Optical Input System

### Patent Claims

1. A program unit for electric household appliances, comprising a microprocessor for initiating and controlling the operative cycles of the machine, characterized in that said program unit further comprises encoder means including a bar code (13) associated with an optical bar code reader (14) connected to said microprocessor.

2. A program unit according to claim 1, characterized in that said encoder means including said bar code (13) is disposed on a control panel (10) of the electric household appliance, said optical bar code reader (14) being connected to said control panel by a flexible cable.

3.    A program unit according to claim 1, characterized in that said encoder means including said bar code (13) is disposed on cards (15) adapted to be inserted into a slot (16) formed in a control panel (10) at the interior of which is located said optical bar code reader (17) connected to said microprocessor. ·

4.    A program unit according to claim 1, characterized in that it includes a device (18) physically separate from the electric household appliance, said device comprising an optical reader (20) and a transmitter (21) for transmitting the read data to a receiver (19) disposed on or in the electric household appliance.

FIG. 1

A  90
B  90
C  60

ON    OFF

FIG. 3

A  90
B  90
C  60

ON   OFF

FIG.2

European Patent
Office

EUROPEAN SEARCH REPORT

0123099
Application number

EP 84 10 2691

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-4 329 933  (BECKERMAN)<br>* Abstract; figure 1 * | 1-3 | G 05 B  19/12 |
| A | GB-A-2 034 995  (BBC)<br>* Whole document * | 1-3 | |
| A | DE-A-3 127 235  (THE TAPPAN)<br>* Abstract; figure 1 * | 1-3 | |
| A | FR-A-2 356 984  (VALCOR)<br>* Whole document * | 3 | |
| A | FUNKSCHAU, no. 12, June 1981,<br>pages 69-70, Munich, DE;<br>"Wünschprogramm aus der<br>Fernsehzeitschrift" | | **TECHNICAL FIELDS SEARCHED (Int. Cl. ³)**<br><br>G 05 B  19 |

The present search report has been drawn up for all claims

| Place of search | Date of completion of the search | Examiner |
|---|---|---|
| THE HAGUE | 05-07-1984 | RESSENAAR J.P. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
                          
& : member of the same patent family, corresponding
    document

EPO Form 1503. 03.82